# EUROPÄISCHE PATENTSCHRIFT

(11) **EP 1 053 405 B1**
(45) Veröffentlichungstag und Bekanntmachung des Hinweises auf die Patenterteilung: **09.07.2003**
(21) Anmeldenummer: 99962244.2
(22) Anmeldetag: 08.12.1999
(51) Int. Cl.: F16B 25/00

(54) **SELBSTFURCHENDE SCHRAUBE**
SELF-TAPPING SCREW
VIS AUTO-TARAUDEUSE

(30) Priorität: 11.12.1998 DE 19857311
(43) Veröffentlichungstag der Anmeldung: 22.11.2000
(73) Patentinhaber: EJOT VERBINDUNGSTECHNIK GmbH & Co. KG, D-57334 Bad Laasphe (DE)
(72) Erfinder: KOENIG, Gottfried, D-57334 Bad Laasphe (DE); MENZ, Werner, D-99897 Tambach-Dietharz (DE)
(74) Vertreter: Bardehle, Heinz, Dipl.-Ing.
(86) Internationale Anmeldenummer: EP9909661
(87) Internationale Veröffentlichungsnummer: WO00036310

(56) Entgegenhaltungen:
- US-A- 3 377 906
- US-A- 3 724 315
- US-A- 3 978 760
- US-A- 4 981 406

## Beschreibung

Die Erfindung bezieht sich auf eine selbstfurchende Schraube mit mindestens teilweise unrunder Hüllkurve des Gewindes und einem Eindringabschnitt und einem Halteabschnitt.

Eine derartige Schraube ist in der europäischen Patentschrift 86 852 offenbart. In dieser Patentschrift sind verschiedene Hüllkurven des Gewindes einer selbstfurchenden Schraube beschrieben, nämlich aufeinanderfolgend in einem Eindringbereich mit einer dreilobularen Gewindeform mit zunehmendem Hüllkreisdurchmesser, einem anschließenden Bereich mit ebenfalls dreilobularer Gewindeform, allerdings mit gleichbleibendem Hüllkreisdurchmesser und schließlich einem Bereich mit zylindrischer Hüllkurve. Darüberhinaus zeigt die Patentschrift eine Hüllkurve des Gewindes mit anstatt der dreilobularen Gewindeform einer solchen mit nur zwei Hochstellen, was im wesentlichen einer elliptischen Hüllkurve gleicht. Dabei bildet der Bereich mit zylindrischem Hüllkreis den Halteabschnitt.

In der DE PS 27 06 246 ist eine selbstfurchende Schraube offenbart, die über ihre gesamte Gewindelänge einen Querschnitt nach Art eines bogenförmigen Polygons aufweist. Konkret zeigen die Figuren der Patentschrift hierzu ein einem Dreieck angenähertes Polygon (ähnlich der trilobularen Gestaltung gemäß der vorstehend erwähnten europäischen Patentschrift 86 852). Die Schraube gemäß der DE PS 27 06 246 weist einen Eindringabschnitt und einen Halteabschnitt auf. Im Bereich des Eindringabschnitts ist die polygonale Gestaltung mehr ausgeprägt als im Halteabschnitt, in dem die Aufwölbung an den Außenstellen des Polygons mehr abgerundet ist als im Bereich des Eindringabschnitts. Hierdurch erreicht man im Eindringabschnitt ein entsprechend geringes Eindrehmoment. Der Eindringabschnitt ist darüberhinaus gegenüber dem Halteabschnitt mit kleinerer Hüllkurve ausgestaltet, um das Eindrehen der Schraube zu erleichtern. Elliptische Querschnitte sind in der genannten Patentschrift nicht erwähnt.

In der US PS 3 978 760 ist eine weitere Gestaltung einer gewindeformenden Schraube offenbart, bei der der Eindringabschnitt elliptisch gestaltet ist und in einen zylindrischen Querschnitt in Richtung zum Halteabschnitt übergeht.

Bei den vorstehend beschriebenen Schrauben steht der Gedanke im Vordergrund, durch eine besondere Gestaltung des Gewindes im Eindringabschnitt das Eindrehmoment so gering wie möglich zu halten. Beim Eindrehen einer selbstfurchenden Schraube setzt sich dieser zunächst das Material des betreffenden Mutterteils als Widerstand entgegen, in das das Gewinde einzufurchen ist. Außerdem entsteht im Verlauf des Eindrehens durch Reibung der eingedrehten Gewindegänge ein zusätzlicher Drehmomentbedarf. Es gibt daher eine große Zahl weiterer Druckschriften, die sich mit dem in Rede stehenden Problem beschäftigen. Unter anderem wird in dem betreffenden Stand der Technik vorgeschlagen, im Eindringabschnitt bei selbstfurchenden Schrauben an den führendenden Gewindegängen Abflachungen anzubringen, so daß sich das Furchen des Gewindes und die sich beim weiteren Eindrehen der Schraube ergebende Reibung auf die stehengebliebenen Teile der Gewindegänge beschränkt. Trotz dieser vielfältigen Bemühungen stellt die Reduzierung des Eindrehmoments bei Aufrechterhaltung eines festen Sitzes einer selbstfurchenden Schraube über ihren Halteabschnitt nach wie vor ein Problem dar.

Der Erfindung liegt daher die Aufgabe zugrunde, eine selbstfurchende Schraube der eingangs angegebenen Art zu schaffen, die ein geringes Eindrehmoment gewährleistet und gute Eigenschaften hinsichtlich des festen Sitzes der Schraube in einem Mutterteil aufweist. Die erfindungsgemäße Schraube ist demgemäß dadurch gekennzeichnet, daß der Eindringabschnitt mehrere aufeinanderfolgende Gewindestufen enthält, die jeweils mindestens einen Gewindegang und längs der Gewindestufe im wesentlichen eine gleiche, fluchtende Hüllkurve aufweisen, die elliptisch verläuft, wobei die Gewindestufen mit elliptischer Hüllkurve (elliptische Gewindestufe) derart zusammengefaßt sind, daß die großen Achsen der aufeinanderfolgenden elliptischen Gewindestufen, eine Stufengruppe bildend, verdreht zueinander liegen.

Die erfindungsgemäße Schraube beruht auf der Ausnutzung der Eigenschaften einer elliptischen Hüllkurve, und zwar in dem Sinne, daß mindestens zwei Gewindestufen mit elliptischer Hüllkurve (als Stufengruppe bezeichnet) derart aufeinander folgen, daß die großen Achsen dieser elliptischen Gewindestufen verdreht zueinander liegen, wodurch sich beim Eindrehen der Schraube für diese eine stabile Lage der Schraube gegenüber dem betreffenden Mutterteil ergibt. Dies folgt daraus, daß die Schraube, deren Gewinde sich zunächst über zwei diametral gegenüberliegende Punkte (Enden der großen Achsen) gegenüber dem Mutterteil abstützt, mit dem Eindringen der folgenden Gewindestufe mit verdrehter elliptischer Hüllkurve Stützpunkte an den Enden der großen Achse der folgenden Gewindestufe erhält. Es liegen somit mindestens zwei Paare von diametral zueinanderliegenden Stützpunkten vor, wobei die Paare gegeneinander verdreht sind, was zu der vorstehend erwähnten Stabilität der Lage der einzudrehenden Schraube in den Mutterteil führt. Dies hat zur Folge, daß mit dem Eindrehen einer Stufengruppe diese die Schraube gegen ein Verkanten gegenüber dem Mutterteil stützt, so daß der Eindrehvorgang ohne besondere Zentrierungsvorkehrungen weitgehend automatisiert erfolgen kann.

Unter Hüllkurve ist der Verlauf eines die betreffende Gewindestufe einschließenden Mantels zu verstehen, wobei dieser Mantel die jeweils radial äußersten Punkte der Gewindestufe durchläuft. Im Falle einer elliptischen Gewindestufe ist die Hüllkurve eine Ellipse. Handelt es sich dagegen um eine zylindrische Gewindestufe, so verläuft die betreffende Hüllkurve gemäß einem Kreis.

Im einfachsten Fall enthält die Stufengruppe zwei Gewindestufen, deren große Achsen um 90° gegeneinander verdreht sind. Dabei ist es auch möglich, weitere elliptische Gewindestufen in die Stufengruppe einzubeziehen, wobei in diesem Falle von Gewindestufe zu Gewindestufe eine Verdrehung von deren großen Achsen jeweils um 90° vorliegt.

Eine Variante hierzu besteht darin, die Stufengruppe aus drei Gewindestufen aufzubauen, deren große Achsen in diesem Fall von Gewindestufe zu Gewindestufe um 60° gegeneinander verdreht sind. Auch bei einer derartigen Gestaltung ist es natürlich möglich, weitere Gewindestufen in die Stufengruppe einzubeziehen, die dann zu der jeweils benachbarten Gewindestufe hinsichtlich ihrer großen Achse um 60° verdreht sind.

Gemäß einer weiteren Variante kann man zweckmäßig bei Aufbau der Stufengruppe aus vier Gewindestufen deren große Achsen von Gewindestufe zu Gewindestufe jeweils um 45° gegeneinander verdrehen. Auch in diesem Falle lassen sich natürlich weitere Gewindestufen mit gleicher Verdrehung in die betreffende Stufengruppe einbeziehen.

Schließlich sei noch der Fall erwähnt, daß zur Erzielung eines besonders langen Eindringabschnitts die Stufengruppe aus sechs Gewindestufen aufgebaut werden kann, deren große Achsen von Gewindestufe zu Gewindestufe um 30° gegeneinander verdreht sind. Auch in diesem Falle kann man entsprechend verdrehte weitere Gewindestufen hinzufügen.

Eine besonders gute Stabilisierung der Schraube bei ihrem Eindrehen in ein Mutterteil ergibt sich dann, wenn man die Hüllkurven der elliptischen Gewindestufen einer Stufengruppe gleich groß wählt. In diesem Falle ergibt sich eine von Gewindestufe zu Gewindestufe einer Stufengruppe gleichmäßige und symmetrische Abstützung der Gewindestufen gegenüber dem Mutterteil.

Eine Erleichterung des Eindrehens der Schraube in ein Mutterteil kann man dadurch erzielen, daß vor (dem Schraubenkopf abgewandt) einer Stufengruppe eine elliptische Gewindestufe angeordnet ist, deren Hüllkurve kleiner ist als die Hüllkurve der nach hinten folgenden elliptischen Gewindestufe.

Mit der vorgeschalteten elliptischen Gewindestufe mit kleinerer Hüllkurve wird gewissermaßen ein Vorfurchen des Gewindes vorgenommen, dem dann zur endgültigen Furchung des Gewindes die Stufengruppe folgt.

Es ist auch möglich, die Stufengruppe dadurch zu ergänzen, daß nach (dem Schraubenkopf zugewandt) einer Stufengruppe eine elliptische Gewindestufe angeordnet ist, deren Hüllkurve größer ist als die Hüllkurve der nach vorne folgenden elliptischen Gewindestufe. Mit dieser der Stufengruppe folgenden elliptischen Gewindestufe wird eine Art Kalibrierung des fertiggefurchten Gewindes vorgenommen.

Eine Zentrierung der Schraube bei ihrem Eindrehen kann man dadurch herbeiführen, daß am vorderen, dem Schraubenkopf abgewandten Ende des Gewindes neben einer elliptischen Gewindestufe eine Gewindestufe mit zylindrischer Hüllkurve (zylindrische Gewindestufe) angeordnet ist, deren Durchmesser kleiner ist als die große Achse der Hüllkurve der elliptischen Gewindestufe.

Durch die Gewindestufe mit zylindrischer Hüllkurve und einem Durchmesser, der kleiner ist als die große Achse der Hüllkurve der folgenden elliptischen Gewindestufe, ergibt sich eine Führung für die einzudrehende Schraube, da die zylindrische Gewindestufe bei ihrem Eindrehen sich gleichmäßig gegenüber dem Mutterteil abstützt. Für diese zylindrische Gewindestufe sieht man zweckmäßig nur wenige Gewindegänge, vorzugsweise bis zu vier Gewindegängen vor.

Eine günstige Gestaltung für den Halteabschnitt ergibt sich dadurch, daß am hinteren, dem Schraubenkopf zugewandten Ende des Gewindes neben einer elliptischen Gewindestufe eine Gewindestufe mit zylindrischer Hüllkurve (zylindrische Gewindestufe) angeordnet ist, deren Durchmesser gleich oder kleiner ist als die große Achse der Hüllkurve der elliptischen Gewindestufe. Durch diese zylindrische Gewindestufe an dem dem Schraubenkopf zugewandten Ende des Gewindes ergibt sich für den Halteabschnitt die größtmögliche Flankenüberdeckung und damit eine gute Haftung der eingedrehten Schraube in dem Mutterteil. Dabei ist zu berücksichtigen, daß der Durchmesser der zylindrischen Gewindestufe nur sehr geringfügig kleiner ist als die große Achse der Hüllkurve der folgenden elliptischen Gewindestufe, da dies für die Verringerung der Gewindereibung im Bereich des Halteabschnitts besonders günstig ist, wobei aber praktisch immer noch ausreichende Flankenüberdeckung und damit gegenseitige Berührung im Bereich des Halteabschnitts gegeben ist.

Um sämtliche Effekte in günstiger Weise ausnützen zu können, sieht man am vorderen und am hinteren Ende des Gewindes eine zylindrische Gewindestufe vor.

Für die vorderste elliptische Gewindestufe sieht man zweckmäßig nur wenige Gewindegänge, vorzugsweise bis zu vier Gewindegänge, vor, da von dieser Gewindestufe nur beim Eindrehen in ein Mutterteil eine Art Vorfurchung vorzunehmen ist.

Die Schraube läßt sich auch so gestalten, daß mehrere Stufengruppen hintereinander vorgesehen sind. In diesem Falle übernehmen die wesentliche Aufgabe des Furchens mehrere Stufengruppen nacheinander. In diesem Falle gestaltet man die Hüllkurve der zunächst in ein Mutterteil eindringenden Stufengruppe kleiner als die der folgenden Stufengruppe, um auf diese Weise gewissermaßen stufenweise das einzufurchende Gewinde aufzuweiten.

In den Figuren sind Ausführungsbeispiele der Erfindung dargestellt. Es zeigen:
- Figur 1: eine Schraube in Seitensicht mit einem Eindringabschnitt und einem Halteabschnitt,
- Figur 2: eine Darstellung eines Axialschnitts der Schraube entlang der Linie II-II in Figur 1 mit einer Stufengruppe, deren große Achsen um 90° gedreht sind,
- Figur 3: eine ähnliche Schnittdarstellung (II-II) mit um 60° gedrehten großen Achsen der Gewindestufen,
- Figur 4: in schematischer Darstellung die aufeinanderfolgende Anordnung einer zylindrischen Gewindestufe, einer folgenden Stufengruppe und einer zylindrischen Gewindestufe am hinteren Ende des Gewindes,
- Figur 5: eine ähnliche Anordnung, bei der zwischen der anfänglichen zylindrischen Gewindestufe und der Stufengruppe eine einzelne elliptische Gewindestufe angeordnet ist,
- Figur 6: eine Anordnung mit zwei aufeinanderfolgenden Stufengruppen,
- Figur 7: eine Anordnung mit einer Stufengruppe, der eine zylindrische Gewindestufe vorgeordnet und eine elliptische Gewindestufe nachgeordnet ist.

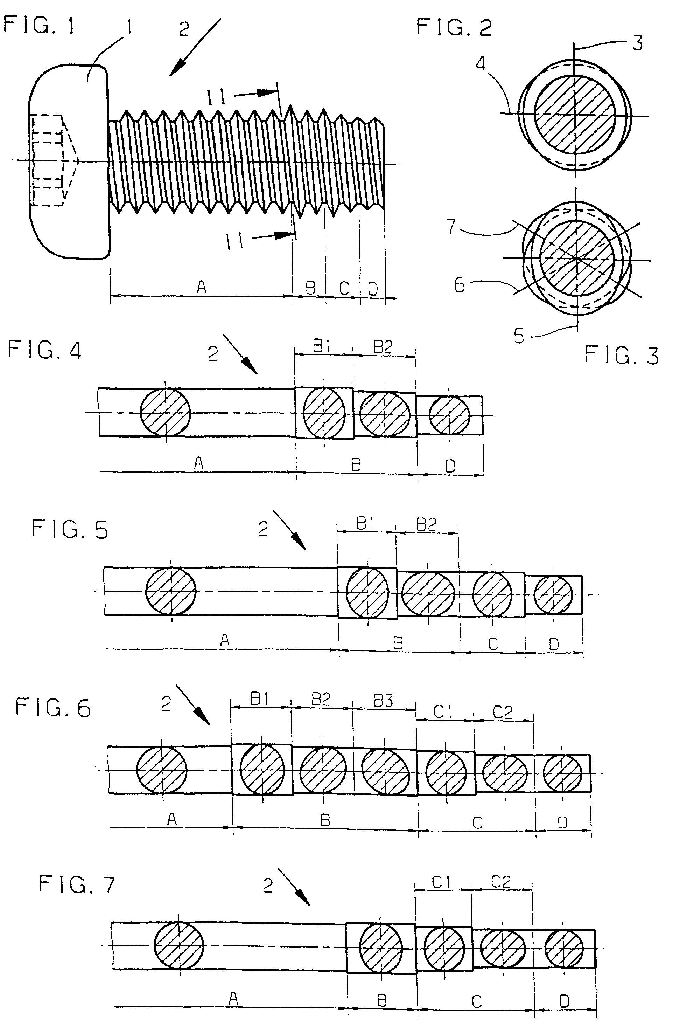

Ein Ausführungsbeispiel einer erfindungsgemäßen Schraube ist in Figur 1 in Seitensicht dargestellt. Die Schraube weist den Schraubenkopf 1 mit daran anschließendem Gewinde 2 auf. Das Gewinde 2 weist mehrere, anhand der Figuren 4-7 erläuterte Abschnitte auf, und zwar den Eindringabschnitt D, C, B und den Halteabschnitt A. Dabei ist der Eindringabschnitt D, C, B in mehrere Furchzonen gemäß den eingezeichneten Bereichen D, C und B eingeteilt, auf die weiter unten (Figuren 4-7) näher eingegangen wird.

Das Gewinde 2 enthält Gewindestufen, die jeweils mindestens einen Gewindegang aufweisen, wobei die Gewindestufe mit den Scheiteln ihres Gewindes eine Hüllkurve beschreibt, die längs der Gewindestufe im wesentlichen gleichbleibt und durchgehend fluchtet. Dabei können verschiedene Hüllkurven hinsichtlich ihrer Größe und Lage vorgesehen werden, wie nachstehend anhand der Schnittzeichnungen gemäß den Figuren 2 und 3 erläutert sei. Die Schnittdarstellungen folgen der Linie II-II gemäß Figur 1.

Bei der Schraube gemäß Figur 2 handelt es sich um eine solche, bei der aufeinanderfolgend elliptische Gewindestufen (Gewindestufen mit elliptischer Hüllkurve) vorgesehen sind, die in Axialrichtung der Schraube derart aufeinander folgen, daß die großen Achsen der elliptischen Hüllkurven um 90° gegeneinander verdreht sind. Die strichpunktierten Linien 3 und 4 stellen dabei die jeweilige große Achse dar. Die Aufeinanderfolge der betreffenden elliptischen Gewindestufen in Achsrichtung der Schraube wird nachstehend anhand der Figuren 4-7 erläutert.

Bei der Schnittdarstellung gemäß Figur 3, die ebenfalls der Linie II-II aus Figur 1 folgt, handelt es sich um aufeinanderfolgende elliptische Gewindestufen, die jeweils um 60° gegeneinander verdreht sind, was sich aus den die betreffenden großen Achsen darstellenden strichpunktierten Linien 5, 6 und 7 ergibt.

Insbesondere in Zusammenhang mit den Figuren 2 und 3 sei darauf hingewiesen, daß die betreffenden Darstellungen die Ausmaße der Hüllkurven in überhöhter Weise zeigen, was auch für die weiteren Figuren gilt, um die erfindungsgemäße Gestaltung der Schraube zu verdeutlichen.

Zur Erläuterung der Aufeinanderfolge der einzelnen Gewindestufen und Stufengruppen längs des Gewindes 2 der Schraube nach Figur 1 ist für die Darstellung in den Figuren 4-7 eine Zeichnungsweise gewählt, gemäß der in dem betreffenden Abschnitt des Gewindes 2 die jeweilige Hüllkurve der den Abschnitt bestimmenden Gewindestufe als Schnitt eingezeichnet ist. Die in den Figuren 4-7 gezeichneten Querschnitte entsprechen also im Prinzip denjenigen gemäß den Figuren 2 und 3.

In Figur 4 ist das Gewinde 2 der erfindungsgemäßen Schraube mit den Abschnitten A, B und D dargestellt, wobei der Abschnitt D das führende Ende der Schraube (dem nicht dargestellten Schraubenkopf 1 abgewandt) ist. In dem Abschnitt D handelt es sich um eine Gewindestufe mit zylindrischer Hüllkurve. An den Abschnitt D schließt sich der Abschnitt B an, der die beiden elliptischen Gewindestufen B1 und B2 enthält. Die beiden Gewindestufen B1 und B2 weisen gleiche elliptische Hüllkurven auf, jedoch sind die jeweiligen großen Achsen der Hüllkurven der Gewindestufen B1 und B2 um 90° gegeneinander verdreht, was der Darstellung in Figur 2 entspricht. Bei den beiden Gewindestufen B1 und B2 handelt es sich zusammengefaßt um die Stufengruppe B. Wie ersichtlich, ist der Durchmesser der zylindrischen Hüllkurve des Abschnitts D geringfügig kleiner als die kleine Achse der Hüllkurve im Abschnitt B. Beim Eindrehen der Schraube gemäß Figur 4 wird also zunächst durch den geringsten Durchmesser im Abschnitt D das Gewinde im Mutterteil vorgefurcht, woraufhin das weitere Ausfurchen des Gewindes durch den Abschnitt B2 und schließlich durch den Abschnitt B1 erfolgt. Die Abschnitte B und D gemäß Figur 4 bilden den Eindringabschnitt des Gewindes 2. An diesen schließt sich der Abschnitt A als Halteabschnitt des Gewindes 2 an, in dem eine Gewindestufe mit zylindrischer Hüllkurve vorliegt, und zwar durchgehend über den Rest des Gewindes. Der Durchmesser der Hüllkurve im Abschnitt A ist geringfügig kleiner als die große Achse im Abschnitt B, so daß bei vollständigem Eindrehen des Gewindes 2 der Schraube über den Halteabschnitt keine besonders großen Reibungskräfte überwunden werden müssen. Dabei handelt es sich hinsichtlich der Abstufung der großen Achse des Abschnitts B zu dem Durchmesser der Hüllkurve Abschnitt A nur um eine sehr geringe Durchmesserverringerung, so daß im Halteabschnitt A die betreffende Schraube einen festen Sitz beibehält.

Bei der Schraube gemäß Figur 5 handelt es sich insofern um eine Abwandlung zu der Schraube gemäß Figur 4, als dem Abschnitt B zwei Abschnitte C und D vorgeschaltet sind, wobei der Abschnitt D dem Abschnitt D gemäß Figur 4 entspricht. Zwischen dem Abschnitt D und dem Abschnitt B in Figur 5 ist der Abschnitt C als Gewindestufe mit elliptischer Hüllkurve angeordnet, und zwar mit einer Länge der großen Achse, die der Länge der kleinen Achse im Abschnitt B entspricht. Aufgrund dieser Zwischenschaltung des Abschnitts C ergibt sich ein erleichtertes Vorfurchen des Gewindes, das hierbei in drei Stufen, nämlich über die Abschnitte D, C und B erfolgt.

Eine weitere Abwandlung des Gewindes 2 ist in Figur 6 dargestellt. Bei dieser Abwandlung ist gegenüber der Schraube gemäß Figur 5 zwischen die Abschnitte B und D ein durch eine Stufengruppe gebildeter Abschnitt C vorgesehen. Der Abschnitt C gemäß Figur 5, enthaltend eine einzige elliptische Gewindestufe, wird bei dem Gewinde gemäß Figur 6 durch eine Stufengruppe C mit den elliptischen Gewindestufen C1 und C2 ersetzt. Die Hüllkurven der beiden elliptischen Gewindestufen C1 und C2 sind einander gleich, jedoch gegeneinander um 90° versetzt (wie das auch bei den Stufengruppen B gemäß den Figuren 4 und 5 der Fall ist). Mit der Einschaltung der Stufengruppe C zwischen den Abschnitt D und den Abschnitt B wird eine weitere Verringerung des Eindrehmomentes beim Vorfurchen des Gewindes in dem Mutterteil erzielt.

Die in der Figur 6 dargestellte Stufengruppe B enthält hier (im Gegensatz zur Stufengruppe B gemäß Figur 5) drei elliptische Gewindestufen mit gleichen Hüllkurven, jedoch jeweils um 60° gegeneinander versetzt, was der Darstellung in Figur 3 entspricht. Auch diese Maßnahme dient der Verringerung des Eindrehmomentes und der Stabilisierung der Schraube bei ihrem Eindrehen in das Mutterteil.

Bei der Schraube gemäß Figur 7 handelt es sich um eine Vereinfachung der Schraube gemäß Fig. 6, und zwar insofern, als der Abschnitt B der Schraube gemäß Fig. 6, der eine durch drei elliptische Gewindestufen gebildete Stufengruppe aufweist, durch die einzelne Gewindestufe B in Figur 7 ersetzt ist. Bei der elliptischen Gewindestufe B, die alleinig in diesem Abschnitt vorgesehen ist. handelt es sich um eine elliptische Hüllkurve, wobei die Länge der kleinen Achse der Länge der großen Achse im Abschnitt C entspricht. An die alleinige Gewindestufe B in Figur 7 schließt sich dann, wie bei den vorhergehenden Figuren beschrieben, die Gewindestufe A als Halteabschnitt an.

Es sei noch darauf hingewiesen, daß die in den Figuren 6 und 7 dargestellte Gleichheit des Durchmessers der zylindrischen Hüllkurve in den Abschnitten D mit der kleinen Achse der Hüllkurve in den Abschnitten C2 keine zwingende Notwendigkeit darstellt. Es ist auch möglich, den Durchmesser der zylindrischen Hüllkurve in den Abschnitten D geringfügig kleiner auszubilden. Das Gleiche gilt für die Gestaltung der Schraube gemäß Fig. 5, die die Gleichheit der großen Achse der Hüllkurve in Abschnitt C mit der kleinen Achse der Hüllkurve im Abschnitt B2 zeigt. Auch hier kann die große Achse im Abschnitt C geringfügig kleiner gewählt werden. Weiterhin wird darauf hingewiesen, daß der Durchmesser der zylindrischen Hüllkurve im Abschnitt A gemäß den Fig. 4 bis 7 auch gleich der großen Achse im anschließenden Abschnitt B sein kann.

## Patentansprüche

1. Selbstfurchende Schraube mit mindestens teilweise unrunder Hüllkurve des Gewindes (2) und einem Eindringabschnitt (B, C, D) und einem Halteabschnitt (A), **dadurch gekennzeichnet, daß** der Eindringabschnitt mehrere aufeinanderfolgende Gewindestufen (B1, B2, B3, C1, C2) enthält, die jeweils mindestens einen Gewindegang und längs der Gewindestufe im wesentlichen eine gleiche, fluchtende Hüllkurve aufweisen, die elliptisch verläuft, wobei die Gewindestufen mit elliptischer Hüllkurve (B1, B2, B3, C1, C2) derart zusammengefaßt sind, daß die großen Achsen der aufeinanderfolgenden elliptischen Gewindestufen, eine Stufengruppe (B, C) bildend, verdreht zueinander liegen.

2. Schraube nach Anspruch 1, **dadurch gekennzeichnet, daß** die Stufengruppe (B, C) mindestens zwei Gewindestufen (B1, B2, B3, C1, C2) enthält, deren große Achsen um 90° bzw. um gleiche Winkel gegeneinander verdreht sind.

3. Schraube nach einem der Ansprüche 1 und 2, **dadurch gekennzeichnet, daß** die Hüllkurven der elliptischen Gewindestufen (B1, B2, B3, C1, C2) ein Stufengruppe (B, C) gleich groß sind.

4. Schraube nach einem der Ansprüche 1 bis 3, **dadurch gekennzeichnet, daß** vor einer Stufengruppe (B) eine elliptische Gewindestufe (C) angeordnet ist, deren Hüllkurve kleiner ist als die Hüllkurve der nach hinten folgenden elliptischen Gewindestufe (B 2).

5. Schraube nach einem der Ansprüche 1 bis 3, **dadurch gekennzeichnet, daß** nach einer Stufengruppe (C) eine elliptische Gewindestufe (B) angeordnet ist, deren Hüllkurve größer ist als die Hüllkurve der nach vorne folgenden elliptischen Gewindestufe (C1).

6. Schraube nach einem der Ansprüche 1 bis 5, **dadurch gekennzeichnet, daß** am vorderen, dem Schraubenkopf (1) abgewandten Ende des Gewindes (2) neben einer elliptischen Gewindestufe (B2) eine Gewindestufe (D) mit zylindrischer Hüllkurve angeordnet ist, deren Durchmesser kleiner ist als die große Achse der Hüllkurve der elliptischen Gewindestufe (B2).

7. Schraube nach Anspruch 6, **dadurch gekennzeichnet, daß** die vordere zylindrische Gewindestufe nur wenige Gewindegänge, vorzugsweise bis zu 4 Gewindegänge, aufweist.

8. Schraube nach einem der Ansprüche 1 bis 7, **dadurch gekennzeichnet, daß** am hinteren, dem Schraubenkopf (1) zugewandten Ende des Gewindes (2) neben einer elliptischen Gewindestufe (B 1) eine Gewindestufe (A) mit zylindrischer Hüllkurve angeordnet ist, deren Durchmesser gleich oder kleiner ist als die große Achse der Hüllkurve der elliptischen Gewindestufe (B 1).

9. Schraube nach einem der Ansprüche 6 bis 8, **dadurch gekennzeichnet, daß** am vorderen und am hinteren Ende des Gewindes (2) eine zylindrische Gewindestufe (A, D) vorgesehen ist.

10. Schraube nach einem der Ansprüche 1 bis 9, **dadurch gekennzeichnet, daß** die vorderste elliptische Gewindestufe nur wenige Gewindegänge, vorzugsweise bis zu 4 Gewindegänge, aufweist.

11. Schraube nach einem der Ansprüche 1 bis 10, **dadurch gekennzeichnet, daß** mehrere Stufengruppen (B, C) hintereinander, in Richtung Schraubenkopf größer werdend, vorgesehen sind.

## Claims

1. Self-tapping screw having an at least partially non-round enveloping curve for the thread (2) and having a penetrating section (B, C, D) and a retaining section (A), **characterized in that** the penetrating section contains a plurality of successive thread stages (B1, B2, B3, C1, C2) which each have at least one thread turn and, along the thread stage, have essentially the same, aligned enveloping curve which runs elliptically, the thread stages with an elliptical enveloping curve (B1, B2, B3, C1, C2) being combined such that the major axes of the successive elliptical thread stages, forming a stage group (B, C), are offset with respect to one another.

2. Screw according to Claim 1, **characterized in that** the stage group (B, C) contains at least two thread stages (B1, B2, B3, C1, C2), of which the major axes are offset by 90° or by the same angle with respect to one another.

3. Screw according to either of Claims 1 and 2, **characterized in that** the enveloping curves of the elliptical thread stages (B1, B2, B3, C1, C2) of a stage group (B, C) are the same size.

4. Screw according to one of Claims 1 to 3, **characterized in that** arranged upstream of a stage group (B) is an elliptical thread stage (C), of which the enveloping curve is smaller than the enveloping curve of the elliptical thread stage (B2) following to the rear.

5. Screw according to one of Claims 1 to 3, **characterized in that** arranged downstream of a stage group (C) is an elliptical thread stage (B), of which the enveloping curve is greater than the enveloping curve of the elliptical thread stage (C1) following to the front.

6. Screw according to one of Claims 1 to 5, **characterized in that** arranged alongside an elliptical thread stage (B2) at the front end of the thread (2), said end being remote from the screw head (1), is a thread stage (D) with a cylindrical enveloping curve, of which the diameter is smaller than the major axis of the enveloping curve of the elliptical thread stage (B2).

7. Screw according to Claim 6, **characterized in that** the front cylindrical thread stage only has a small number of thread turns, preferably up to 4 thread turns.

8. Screw according to one of Claims 1 to 7, **characterized in that** arranged alongside an elliptical thread stage (B1) at the rear end of the thread (2), said end being directed towards the screw head (1), is a thread stage (A) with a cylindrical enveloping curve, of which the diameter is equal to or smaller than the major axis of the enveloping curve of the elliptical thread stage (B1).

9. Screw according to one of Claims 6 to 8, **characterized in that** a cylindrical thread stage (A, D) is provided at the front end and at the rear end of the thread (2).

10. Screw according to one of Claims 1 to 9, **characterized in that** the foremost elliptical thread stage only has a small number of thread turns, preferably up to 4 thread turns.

11. Screw according to one of Claims 1 to 10, **characterized in that** a plurality of stage groups (B, C) are provided one behind the other, such that they increase in size in the direction of the screw head.

## Revendications

1. Vis autotaraudeuse avec une enveloppante du filetage (2) au moins partiellement ovalisée et avec une portion de pénétration (B, C, D) et une portion de retenue (A), **caractérisée en ce que** la portion de pénétration contient plusieurs tronçons filetés successifs (B1, B2, B3, C1, C2) qui comportent chacun au moins une spire de filet et, sur la longueur du tronçon fileté, essentiellement une enveloppante identique alignée dont le tracé est elliptique, les tronçons filetés à enveloppante elliptique (B1, B2, B3, C1, C2) étant regroupés de façon que les grands axes des tronçons filetés elliptiques successifs soient tournés les uns par rapport aux autres en formant un groupe de tronçons (B, C).

2. Vis selon la revendication 1, **caractérisée en ce que** le groupe de tronçons (B, C) comporte au moins deux tronçons filetés (B1, B2, B3, C1, C2) dont les grands axes sont tournés les uns par rapport aux autres de 90°, respectivement du même angle.

3. Vis selon une des revendications 1 et 2, **caractérisée en ce que** les enveloppantes des tronçons filetés elliptiques (B1, B2, B3, C1, C2) d'un groupe de tronçons (B, C) sont identiques.

4. Vis selon une des revendications 1 à 3, **caractérisée en ce qu'**avant un groupe de tronçons (B) est disposé un tronçon fileté elliptique (C) dont l'enveloppante est plus petite que l'enveloppante du tronçon fileté elliptique (B2) qui le suit vers l'arrière.

5. Vis selon une des revendications 1 à 3, **caractérisée en ce qu'**après un groupe de tronçons (C) est disposé un tronçon fileté elliptique (B) dont l'enveloppante est plus grande que l'enveloppante du tronçon fileté elliptique (C1) qui le suit vers l'avant.

6. Vis selon une des revendications 1 à 5, **caractérisée en ce qu'**à l'extrémité avant du filetage (2) orientée à l'opposé de la tête de vis (1) est disposé, à côté d'un tronçon fileté elliptique (B2), un tronçon fileté (D) à enveloppante cylindrique dont le diamètre est inférieur au grand axe de l'enveloppante du tronçon fileté elliptique (B2).

7. Vis selon la revendication 6, **caractérisée en ce que** le tronçon fileté cylindrique avant ne comporte que peu de spires de filet, de préférence jusqu'à 4 spires de filet.

8. Vis selon une des revendications 1 à 7, **caractérisée en ce qu'**à l'extrémités arrière du filetage (2) orientée vers la tête de vis (1) est disposé, outre un tronçon fileté elliptique (B1), un tronçon fileté (A) à enveloppante cylindrique dont le diamètre est égal ou inférieur au grand axe de l'enveloppante du tronçon fileté (B1).

9. Vis selon une des revendications 6 à 8, **caractérisée en ce qu'**à l'extrémité avant et à l'extrémité arrière du filetage (2) est prévu un tronçon fileté cylindrique (A, D).

10. Vis selon une des revendications 1 à 9, **caractérisée en ce que** le tronçon fileté elliptique le plus à l'avant ne comporte que quelques spires de filet, de préférence jusqu'à 4 spires de filet.

11. Vis selon une des revendications 1 à 10, **caractérisée en ce que** plusieurs groupes formant tronçons (B, C) sont prévus les uns derrière les autres de manière croissante en direction de la tête de vis.
